# EUROPEAN PATENT SPECIFICATION

(11) **EP 1 982 312 B1**
(45) Date of publication and mention of the grant of the patent: **12.09.2012**
(21) Application number: 07700366.3
(22) Date of filing: 11.01.2007
(51) Int. Cl.: G07C 9/00, A45C 11/18, A45C 13/18

(54) **A SECURE WALLET**
SICHERE BRIEFTASCHE
PORTEFEUILLE SÉCURISÉ

(30) Priority: 13.01.2006 GB 0600705; 25.05.2006 GB 0610435
(43) Date of publication of application: 22.10.2008
(73) Proprietor: Richings, Paul, Leavesden, Hertfordshire, WD25 7GD (GB); Barling, Marion, Leavesden, Hertfordshire, WD 25 7GD (GB)
(72) Inventor: Richings, Paul, Leavesden, Hertfordshire, WD25 7GD (GB); Barling, Marion, Leavesden, Hertfordshire, WD 25 7GD (GB)
(74) Representative: Draper, Martyn John
(86) International application number: PCT/GB2007/000076
(87) International publication number: WO 2007/080406

(56) References cited:
- DE-U1-202005 010 009
- DE-U1-202005 010 362
- US-A1- 2002 186 131
- US-A1- 2005 275 553

## Description

The present invention relates to a secure credit card wallet. In particular, it relates to a secure credit card wallet for storing credit cards and the like.

A known device for storing credit cards is disclosed in US 5,598,792. This describes a device which holds the credit cards behind a lockable door. The door is unlocked by a number combination lock, in which a user must enter a predetermined number combination. This has the disadvantage that the user must remember the number combination. A card security device according to the preamble of claim 1 is disclosed in US 2002/0186131 A.

The present invention provides a secure credit card wallet comprising:
a casing defining at least one recess for receiving credit cards;
a card holder located in the recess, wherein the card holder has a plurality of slots, each slot suitable for receiving a credit card;
a cover movable relative to the casing between a closed position in which the cover prevents removal of the credit cards and an open position in which removal of the credit cards is possible;
a locking means for releasably securing the cover in the closed position characterized in that the wallet further comprises;
means for communicating with a mobile telephone carried by the user;
a biometric finger print reading device for reading a physical characteristic of a user and producing data corresponding to that characteristic;
processing means for storing and processing data, the processing means connected to the biometric reading device and the locking means; and
the processing means being arranged so that when the characteristic of a user who is determined by the processing means to be authorised to open the wallet is detected, the locking means is released such that the cover is moveable to the open position allowing retrieval of the credit cards from the recess.

This has the advantage that the secure credit card wallet can be opened easily by the user, without remembering any information.

Preferably, the casing is provided with a security means, the security means operable to detect a breakage in the casing.

This has the advantage that if the security wallet is forcibly opened then this is sensed by the wallet and a predetermined action may be carried out.

Preferably, the secure credit card wallet comprises a card disabling means, the card disabling means operable to render the at least one card unusable.

The card disabling means prevents unauthorised use of the cards by disabling the cards if they are stolen or lost.

An embodiment of the present invention will now be described with reference to the accompanying drawings, in which:
Figure 1 is perspective view of the secure credit card wallet of a first aspect of the present invention in a first state;
Figure 2 is cut-away perspective view of the secure credit card wallet of the first aspect of the present invention in a first state;
Figure 3 is a perspective view of a part of the secure credit card wallet of the first aspect of the present invention;
Figure 4 is a plan view of an attachment for use with the secure credit card wallet of the first aspect of the present invention.
Figure 5 is a perspective view of the secure credit card wallet according to a second aspect of the present invention;
Figure 6 is a cut-away side view of the secure credit card wallet according to a second aspect of the present invention;
Figure 7 is a perspective view of the secure credit card wallet according to a third aspect of the present invention.

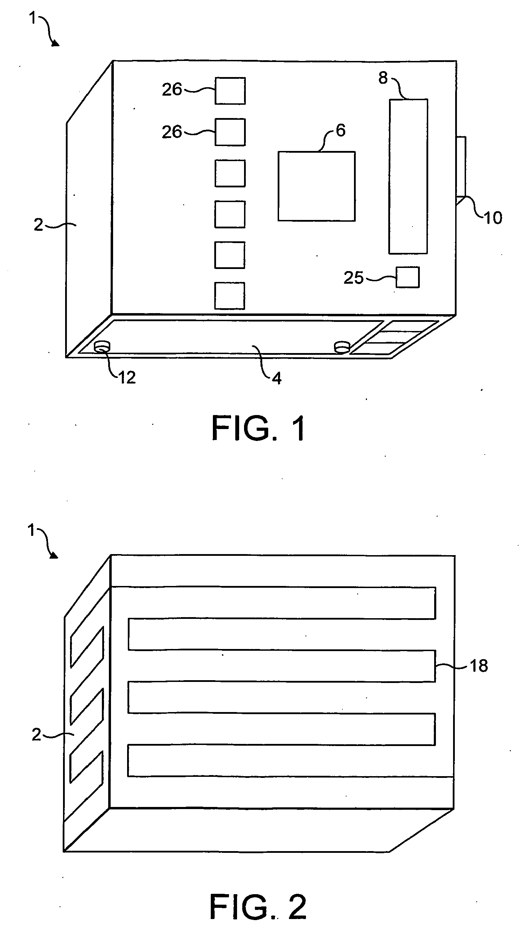

Figure 1 shows a wallet 1, according to a first aspect of the invention comprising an outer casing 2 having a cover 4. A finger print reader 6 is located on a front surface of the casing 2. A Display screen 8 is also located on the front surface of the casing 2. The screen 8 is preferably a Liquid Crystal Display (LCD). The screen 8 is suitable for displaying a Personal Identification Number (PIN). An adaptor 10 is located on a side surface of the casing 2, suitable for accepting a charger or keypad as will be described in more detail below.

The casing 2 defines a recess which can be used to hold credit cards. The cover 4 is moveable relative to the casing 2, and can close the opening of the recess to prevent the credit cards from being removed. The cover 4 can be pivoted open to allow credit cards to be removed from the recess.

The cover 4 has locking means 12 in order to securely fasten the cover 4 over the opening of the housing 2, in a position to prevent removal of the credit cards. The locking means 12 are releasable to allow movement of the cover 4 away from the opening, in order to allow credit cards to be removed.

The finger print reader 6 functions to read the finger prints of a user. Since every person has a unique set of finger prints, the finger print reader 6 allows authorised users to be identified. A processing means (not shown) is located within the casing 2, and linked to the finger print reader 6 and screen 8. The processing means is able to store data relating to a finger print of an authorised user. The processing means is also able to compare the finger print data produced by the finger print reader 6 with stored data, in order to determine whether the user is the authorised user. The processing means is linked to the locking means, in order to de-activate the locking means.

A power source in the form of a battery is connected to the processing means. The finger print reader 6 and processing means have an activated mode in which they are able to fully function. The finger print reader 6 and processing means may be completely or partially disconnected from the battery to reduce energy consumption. The wallet 1 may have an on/off button for activating the finger print reader and/or processing means. An LED indicator may show whether the finger print reader 6 and/or processing means are activated.

The locking means 12 is biased closed by a spring means (not shown) in the event that the power source fails, in order to prevent opening of the wallet by removal or damage to the power source. The locking means 12 requires power from the power source to open.

A cover (not shown) may be provided over the finger print reader 6, in order to protect the finger print reader 6 from physical damage when not in use. The cover is preferably slidable over the finger print reader 6. The cover may be connected to the processing means, so that sliding the cover away from the finger print reader 6 acts to activate the secure credit card wallet 1.

The casing 2 may be formed of a metal or plastic outer casing, and may have an inner lining. This has the advantage that it is relatively strong and has a relatively low density. The secure credit card wallet 1 is provided with a detection means for detecting breakage of the casing 2, in particular by someone attempting to break the casing 2 to obtain unauthorised access to the credit cards.

A plurality of buttons 26 are provided on a front surface of the wallet 1. Each button 26 is associated with a card, such that operation of a button 26 causes ejection of the corresponding card from the wallet 1. Further buttons may be provided on the front surface of the wallet to operate the wallet 1. Such buttons may provide for input of alphanumeric data, directional control of an element on the screen, or clear or set functions. The buttons can be used to input and retrieve data.

The secure credit card wallet 1 is provided with a means for generating an audible alarm (not shown). A speaker 25 may be located on the casing 2, and connected to the processing means. The speaker 25 is operable to sound an alarm when required.

With reference to Figure 2, a wire circuit 18 in the form of a mesh is located inside the lining of the casing 2. The lining and mesh 18 preferably extends across the whole casing. The lining 2 is electrically non-conductive, which allows the circuit 18 to function within the casing without requiring insulation. If the lining 2 is broken, the circuit 18 will also be broken. The circuit 18 may be connected to a means for disabling or destroying the cards, which is triggered by a break in the circuit 18 in order to ensure that the cards cannot be removed in a useable form. The circuit 18 may also be connected to the processing means, such that if a breakage in the casing is detected, or if the wallet is broken into, some or all of the stored data is automatically erased.

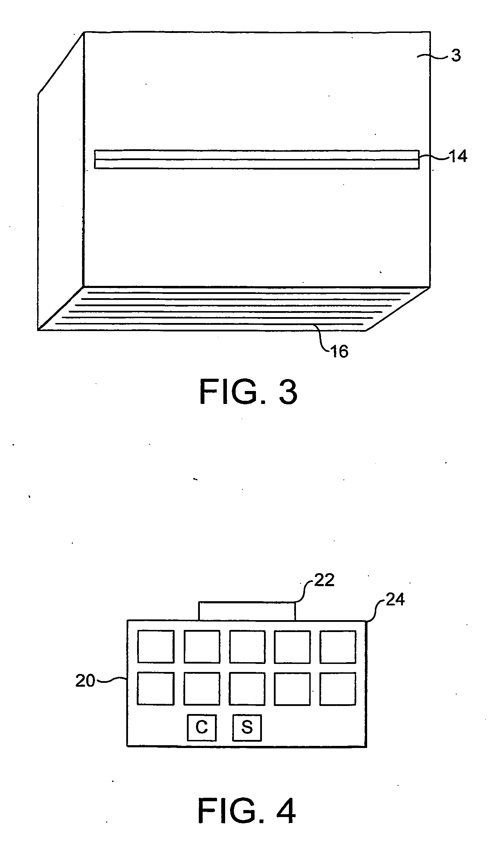

Figure 3 shows a credit card holder 3. The credit card holder 3 may fit in the recess of the casing 2, and is slideable partially or totally out of the recess. The credit card holder 3 has a plurality of slots 16, each slot 16 dimensioned to receive a single credit card. Preferably, the credit card holder 3 has six slots 16. An ejection spring means (not shown) is provided in the credit card holder 3 to bias a selected credit card from the holder 3. The ejection spring means is operable to bias the card a short distance out of the recess. The card is selected by pressing button 26 on outer casing.

A sensor means (not shown) is located adjacent to each slot 16. The sensor means is able to detect whether a credit card is located in each slot 16. The sensor means is connected to the processing means. The sensor means is connected to the ejection spring means for each card, such that the sensor means may detect the state of the ejection spring means to determine if a card is present in a slot 16.

The credit card holder 3 is provided with card disabling means. The card disabling means is connected to the means for detecting a breakage in the casing. The card disabling means is in the form of a wire 14 running between each pair of adjacent slots 16, in a plane parallel to the slots 16. The wire 14 is connected to a power source (not shown) in the form of a battery, the power source operable to supply current to the wire 14 when required. The wire 14 is formed to become very hot when connected to the power source, in order to partially melt an adjacent credit card. The melting is sufficient to disable the credit card to prevent its further use. The wires 14 may reach a temperature of around 150-200°C. Credit cards typically have a magnetic strip extending along their length. The wire 14 is preferably orientated adjacent to the length of the magnetic strip. The wire 14 may also be arranged to destroy the processing means.

The power source for operating the disabling means may be the same power source as connected to the processing means. The common power source may be a 9V battery. Alternatively, the power source for the disabling means may be separate from the power source connected to the processing means. The power source for the disabling means and/or the power source connected to the processing means may be a lithium battery.

Figure 4 shows a keypad attachment 20 which may be removably attached to the wallet 1. The keypad 20 has an adaptor 22 which engages with adaptor 10 on the wallet 1. The keypad 20 has a plurality of keys 24. The keys 24 correspond to indicia bearing at least the numbers 0 to 9, a clear key C and a set key S. Optionally, other keys may also be provided. The adaptor 10 is connected to the processing means and the screen 8, to allow display of data on the screen 8. This allows a PIN for each card to be entered and subsequently displayed on the screen 8.

The wallet 1 may have a means for communicating with a mobile telephone carried by the user. The means is preferably a wireless receiver and/or transmitter, for example using a Bluetooth connection. The mobile telephone and wallet 1 are adapted so that when the wallet 1 and mobile telephone are out of communication range, an alarm signal is generated by the mobile telephone. This is of particular benefit if the user leaves the wallet 1 in a shop accidentally, then the user's mobile telephone will alert the user to immediately return to the shop.

The body portion houses a processing means in the form of a printed circuit board (PCB). The PCB is connected to the fingerprint sensor, keys, display, and lock. The PCB is able to store data, for example a PIN entered through keys. The PCB (not shown) is also able to store data relating to the fingerprints of an authorised user, and is able to compare stored data with data provided by the biometric sensor in order to determine if the user is authorised.

The wallet 1 may have means to attach a carry strap (not shown). The means may be in the form of an aperture or hook in or on the casing 2, to which a carry strap may be attached.

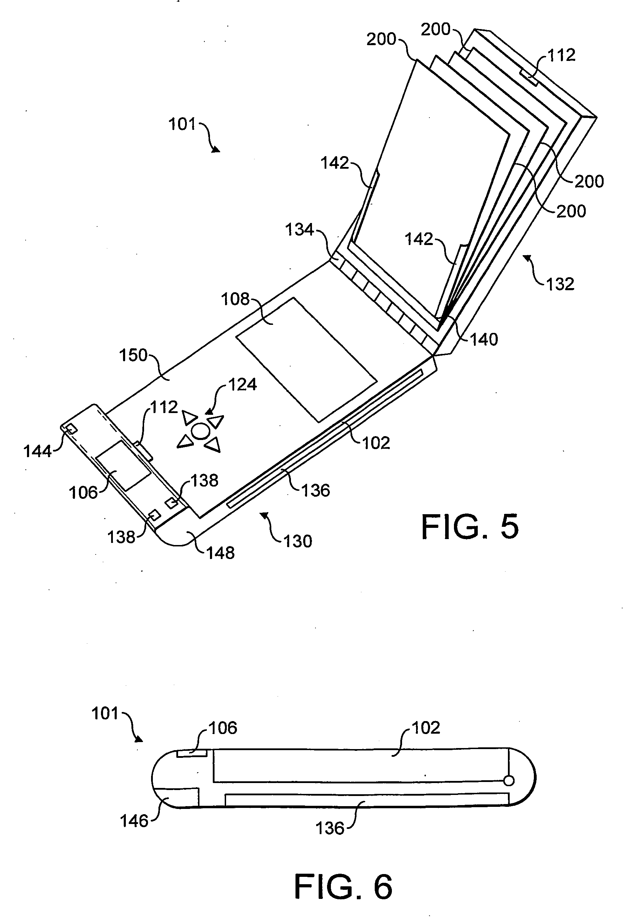

Figures 5 and 6 show a secure credit card wallet 101 according to a second aspect of the invention. The wallet 101 comprises a body portion 130 movably connected to a cover portion 132. Preferably, the body portion 130 and cover portion 132 are rotatably connected by a sprung internal hinge 134. The cover portion 132 is rotatable between an open position shown in Figure 5, and a closed position shown in Figure 6.

An outer casing 102 is formed on the outside surfaces of the body portion 130 and cover portion 132. The outer casing 102 preferably has a wire circuit (not shown) to act as a sensor to detect if the casing 102 is broken. The wire circuit is substantially the same as the wire circuit 18 described earlier for the wallet 1, and is present in the body portion 130 and cover portion 132.

A front area 148 is formed on the body portion 130, at an end of the body portion 130 opposite to the hinge 134. The front area 148 is on the exterior of the wallet 101, even when the cover portion 132 is in its closed position.

The front area 148 houses a fingerprint reader 106. The fingerprint reader 106 is able to read a user's fingerprint, in the same way as described for fingerprint reader 6 on wallet 1. The front area 148 also houses two indicator lights 138. One indicator light 138 indicates when a battery in the wallet 101 is low. One indicator light 138 indicates whether the device is open or shut, i.e. whether the cover portion 132 is in the closed or open position.

A lock 112 is located on the front area 148. The lock 112 is engageable with a complimentary part on the cover portion 132. The lock 112 is able to securely hold the cover portion 132 in a closed position. The lock 112 may be motorised to lock or unlock the cover portion 132.

The front area 148 also forms a strap hook 144. The strap hook 144 is in the form of a aperture through the front area 148, to which a carry strap may be secured.

When the cover portion 132 is in an open position, an interior surface 150 is revealed on the body portion 130. The interior surface 150 supports control keys 124. Keys 124 can be used to enter data into the wallet 101. The data may be alpha-numeric data, and in particular a PIN of the user. A display 108 is located on the interior surface 150. The display is able to display data, and in particular display a PIN associated with a credit card 200.

Credit cards may be releaseably attached to an interior side of the cover portion 132. A card holder 142 is provided for each credit card. The card holders 142 are in the form of a fan 140. The card holders 142 are independently rotatable to allow the credit cards they hold to be easily separated, and hence identified and removed. The card holders 142 may be formed of plastic or metal strips.

The body portion 130 houses a processing means in the form of a printed circuit board (PCB) 136. The PCB 136 is connected to the fingerprint sensor 106, keys 124, display 108, and lock 112. The PCB 136 is able to store data, for example a PIN entered through keys 124. The processing means can then display the data on the screen 108 The PCB 136 is also able to store data relating to the fingerprints of an authorised user, and is able to compare stored data with data provided by the biometric sensor 106 in order to determine if the user is authorised.

The cover portion 130 houses a battery (not shown). The battery is connected to all components requiring electrical power. The casing breakage sensor may also be connected to the processing means, such that if a breakage in the casing is detected, or if the wallet is broken into, some or all of the data stored in the processing means is automatically erased. The battery is accessed through a battery cover 146.

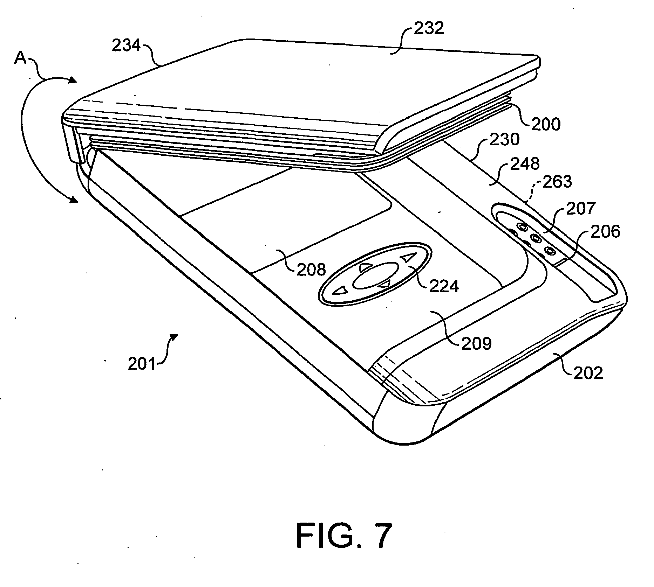

A third embodiment of a secure credit card wallet 201 is shown with reference to Figure 7. The general functionality of the wallet 201 is the same as the other described embodiments, with the following differences.

The wallet 201 has a body portion 230 moveably connected to a cover portion 232. Preferably, the body portion 230 and cover portion 232 are rotatably connected by a hinge 234. The hinge 234 allows the cover portion to rotate into an open position around an axis adjacent and parallel to a top side of the body portion 230, indicated by arrows A. The cover portion 230 is rotatable between a closed position and an open position. Figure 7 shows a (partly open position. Credit cards 200 are releasably secured to an interior side of the cover portion 232.

An outer casing 202 is formed on the external surfaces of the body portion 230, and optionally on the cover portion 232. The outer casing 202 preferably has a security means to detect if the casing 202 is broken. The security means is preferably in the form of a wire circuit (not shown), which is substantially the same as the wire circuit 18 described above. The security means may be linked to card disabling means, in order to make the credit cards 200 unusable in the event that the casing is broken.

A front area 248 is formed on the body portion 230, at a side of the body portion 230. The front area extends along a side of the body portion in a direction perpendicular to the hinge 234. The front area 248 is on the exterior of the wallet 201 even when the cover portion 232 is in its closed position.

The front area 248 houses a finger print reader 206. The fingerprint reader 206 is able to read a user's fingerprint in the same way as described for fingerprint reader 6 on wallet 1. The fingerprint reader 206 is located in a swipe guide 207. The swipe guide 207 is a shaped recess to guide the user's finger or thumb correctly onto the fingerprint reader 206.

A lock (not shown) is provided on the body portion 230 to engage with the cover portion 232. The lock can releasably lock the cover portion in its closed position. An electrical sensor may be provided to detect whether the lid is in the open or closed position.

When the cover portion 232 is in the open position, an internal surface 209 is accessible which supports control keys 224. Keys 224 can be used to enter data into the wallet 202. The data may be alpha-numeric data, and in particular may be a PIN of the user associated with one or more credit cards. A display 208 is located on the interior surface 209. The display is able to display data, and in particular display a PIN associated with a credit card. Alternatively, an external surface of the cover portion 232 may support the control keys 224 and/or display 208.

The body portion 230 houses a processing means in the form of a Printed Circuit Board (PCB) (not shown). The PCB is connected to the fingerprint sensor 206, keys 224, display 208, and lock. The PCB is able to store data, for example a PIN entered through keys 224. The processing means can then display the data on the screen 208. The PCB is also able to store data relating to the fingerprints of an authorised user, and is able to compare stored data with data provided by the biometric sensor 206 in order to determine if the user is authorised. The PCB can cause the lock to release when the user is determined as authorised.

The casing breakage sensor may also be connected to the processing means, such that if a breakage in the casing is detected, or if the wallet is broken into, some or all of the data stored in the processing means is automatically erased.

The body portion 230 houses a battery means to provide power to the wallet 201. The battery means may be in the form of two AAA batteries 263 (not shown). The batteries are connected to all components requiring electrical power.

Credit cards my be releasably attached to an interior side of the cover portion 232. Alternatively, the cards may be attached to the body portion 230 and accessible when the cover portion 232 is in the open position.

A finger grip (not shown) may be provided on the body portion 230. The finger grip is a recess shaped to allow a user to securely grip the wallet 201.

Any features described with reference to any embodiment may also be present on other embodiments of the secure credit card wallet.

The outer casing of the wallet 1, 101, 201 may be formed without the breakage sensors. The outer casing 2, 102, 202 is preferably formed of tough plastic or metal.

The wallet 101,201 may have a credit card destruction system triggered by the casing breakage sensor, as described for the wallet 1. The wallet 101,201 may have a speaker able to sound an alarm if a credit card 200 is removed and not returned to the secure credit card wallet 101,201 within a predetermined time period, or if a break in the casing is detected. The wallet has been described as having a display . Alternatively, the wallet may not have a display. The wallet 101 may also not have keys 124, or may have keys 124 on a separate key pad.

Any of the described embodiments of wallet may have means to connect to an external computing device such as a computer, for example a Personal Computer (PC), Personal Digital Assistant (PDA) or other storage or processing means. The wallet may have a USB connector for connecting to a computer or flash drive data storage. The wallet may have means to connect by Wi-Fi to an external computer. A connection to a computer may allow information to be downloaded to the wallet from the external computing device or uploaded from the wallet to the external computing device.

The secure credit card wallet may be integrally formed with a PDA. The processing means may be able to store various passwords, addresses and usernames, related or unrelated to the cards. The secure credit card wallet may have means to function as a telephone using Voice Over Internet Protocol (VOIP) or as any other mobile telecommunication apparatus.

The secure credit card wallet may comprise a credit card reader to read the data stored in the magnetic strip and/or chip on the credit card. This would allow encrypted data to be generated which could be used for online transactions, without having to manually enter the credit card number into a computer.

The casing of the wallet may be formed of various materials such as plastic, rubber etc with various coatings including leather, wood veneer, Poly Vinyl Chloride (PVC), metal, rubber, plastic etc. To use the wallet 1, the user slides open the cover over the finger print reader 6. This causes the secure credit card wallet 1 to be activated, and the finger print reader 6 supplied with power and ready for use. Alternatively the on/off button may be switched to "on". The display 8 will light up to indicate the secure credit card wallet 1 is switched on.

The user places a finger on the finger print reader 6. The finger print reader 6 passes data relating to the read finger print to the processing means. The processing means compares the data with previously stored data to determine if there is a match between the data. If the data does not correspond with data matching an authorised user, the wallet will not open and the screen 8 indicates that the finger print is not satisfactory to open the wallet.

If the data does correspond with data matching an authorised user, the processing means instructs the locking means 12 to unlock, so that the cover 4 can be moved or open automatically. The user therefore does not have to remember any PIN or number combination in order to open the secure credit card wallet. The LCD screen 8 indicates the fingerprint is satisfactory.

Once the cover 4 is moved, the credit card holder 3 is biased out of the recess by the spring, such that the credit card holder 3 extends approximately 1.5 cm from the casing 2. The user then selects the credit card to be used, by pressing a button 26 and removes it from a slot 16. Alternatively, a mechanism may release a selected card.

The sensor means senses that the card has been removed, and displays the PIN associated with that card on the display screen 8. Alternatively the user may request the PIN data be displayed by means of the buttons, and preferably authorise the request by placing a finger on the sensor 6. The PIN may be displayed for a predetermined period of time, for example 10 seconds, or until a further input is received. This has the advantage that the user does not have to remember the PIN associated with that credit card.

Once the credit card has been used, it is replaced in the slot 16. If the credit card is not returned within a period of time, for example three minutes, the processing means will operate the speaker to generate a sound at regular intervals to remind the user to return the card. When the credit card is returned, the credit card holder 3 is moved fully into the recess, and the cover 4 is moved over the recess. The power source is then partially disconnected from the finger print reader 6 and processing means to reduce power consumption.

The secure credit card wallet 1 is initially set up in the following manner. A charging adaptor is fitted to adaptor 10, and the power source charged for a minimum of a period of time, for example 12 hours.

The charging adaptor is then removed, and the keypad 20 is attached to the adaptor 10. Alternatively, the wallet may have internal replaceable batteries.

The user slides open the cover over the finger print reader 6. This causes the secure credit card wallet 1 to be activated, and the finger print reader 6 supplied with power and ready for use. The display screen 8 will light up to indicate the secure credit card wallet 1 is switched on.

The user places a finger on the finger print reader 6. The finger print reader 6 passes data relating to the read finger print to the processing means. The user presses the 'Set' button on the keypad 20 twice, and the processing means stores the finger print data. Set up instructions may be displayed on the display screen.

The screen 8 may prompt the user to enter a credit card into a slot 16. Once the sensor means detects a card has been inserted, the screen 8 will request a PIN for that credit card. The user will enter the PIN on the keypad and press 'Set'. The PIN will then be stored in the processing means and associated with that credit card. This process will be repeated for each of the credit cards which are to be stored.

A similar procedure can also be used to change the PIN on a credit card. The user places his finger on the finger print reader 6, and attaches the keypad 20. The credit card which is to have its PIN changed is removed from slot 16. The 'Clear' button on the keypad 20 is then held down for a period of time, for example 5 seconds, and the screen 8 indicated that the new PIN should be entered. The new PIN is entered by the keypad 20 and the 'Set' button pressed twice. The screen 8 will then prompt the user to replace the credit card, and the user inserts the credit card into its original slot 16.

In the event that the secure credit card wallet is stolen, the thief will not be able to open the cover 4 since their finger print will not match the authorised finger print. If the thief cracks open the casing 2, the circuit 18 will be broken, and cause wire 14 to automatically heat up to melt the credit cards before they can be removed. The thief will therefore be unable to make use of any of the cards within the secure credit card wallet 1. The wallet may automatically delete all personal data and revert back to factory settings.

In use, the wallet 101 is initially in its secure state, with the cover portion 132 in the closed position. This prevents unauthorised access to the credit cards 200. An authorised user places a finger on the fingerprint reader 106. Data is produced by the reader 106 to determine if the current user is an authorised user. If the PCB determines that the user is authorised, a signal is sent to the lock 112 causing the lock 112 to release. The cover portion 132 is then not restrained, and under the action of the sprung internal hinge 134 moves into its open state.

The user can flip through the credit cards 200 stored in the card holders 142, and select the required card. The user may then select the relevant data and PIN data required and authenticate the request by placing a finger on the finger print reader 106 to verify they are authorised. The display 108 displays the PIN associated with the selected card.

When the user has finished using the credit card, the credit card is replaced in the card holder 142. The cover portion 132 is moved back to its closed position. The lock 112 automatically engages to lock the wallet 101 in its secure closed state.

A finger print reader is described for identifying the user. Alternatively, the reader may be any biometric reader able to measure a physical characteristic of a user, for example, an iris (eye) scanner, or smell detector.

The wire circuit 18 has been described as located inside walls of the casing 2. Alternatively, the circuit 18 may be attached to an inner or outer surface of the casing. The casing may be formed of metal or plastic, and may not have a lining. If the casing is electrically conductive, the detecting circuit 18 may be formed of insulated wires. The detection means for detecting breakage of the casing may use a means other than a wire circuit.

The wallet has been described as having a card disabling means to detect a break in the casing. Alternatively, the wallet may have neither a means to detect a break in the casing or a card disabling means. Such a wallet has a biometric reading device, preferably in the form of a fingerprint reading device. Other features described above may also be provided. In this embodiment, the toughness of the casing alone provides adequate protection for the cards. The casing may be formed without the lining, so that the wire circuit 18 is in or on the walls of the casing.

The card disabling means has been described as a hot wire. Alternatively, the cards may be disabled or destroyed by an flash lamp able to vaporise the magnetic stripe on a card. A flash lamp could alternatively be used to burn words or characters onto the card, in order to indicate that the card is no longer suitable for use. Alternatively, the cards may be disabled or destroyed by releasing chemicals onto the cards, which may be solvents, adhesives, inks or stains to destroy or mark the card. The chemicals could be stored in a capsule within the casing 2 which could be ruptured on the detection a breakage in the casing.

The keys 24 of the wallet 1 have been described as being on a separate attachment 20. Alternatively, the keys 24 may be located on the casing 2.

The secure credit card wallet may be integrally formed with a mobile telephone or a music player, for example an MP3 player. The components for the mobile telephone or music player will be formed within the same casing as described for the secure credit card wallet, and arranged so that the wallet has the relevant additional functions.

## Claims

1. A secure credit card wallet comprising:
a casing defining at least one recess for receiving credit cards;
a card holder located in the recess, wherein the card holder has a plurality of slots, each slot suitable for receiving a credit card;
a cover movable relative to the casing between a closed position in which the cover prevents removal of the credit cards and an open position in which removal of the credit cards is possible;
a locking means for releasably securing the cover in the closed position,
a biometric finger print reading device for reading a physical characteristic of a user and producing data corresponding to that characteristic;
processing means for storing and processing data, the processing means connected to the biometric reading device and the locking means; and
the processing means being arranged so that when the characteristic of a user who is determined by the processing means to be authorised to open the wallet is detected, the locking means is released such that the cover is moveable to the open position allowing retrieval of the credit cards from the recess
**characterized in that** the wallet further comprises; means for communicating with a mobile telephone carried by the user.

2. A secure credit card wallet according to claim 1 further comprising a second cover moveable over the biometric reading device.

3. A secure credit card wallet according to any one of the preceding claims wherein the casing is provided with a security means, the security means operable to detect a breakage in the casing.

4. A secure credit card wallet according to any one of the preceding claims wherein an input device is connectable to the secure credit card wallet, the input device having input means to input alphanumeric data and output means to output the alphanumeric data to the secure credit card wallet.

5. A secure credit card wallet according to any one of claims 1 to 3 further comprising input means to input alphanumeric data and output means to output the alphanumeric data from the secure credit card wallet.

6. A secure credit card wallet according to claim 4 or 5 wherein the input device comprises a plurality of keys, each key corresponding to an alphanumeric symbol.

7. A secure credit card wallet according to any one of the preceding claims and further comprising a screen located on the casing for displaying information, the screen connected to the processing means for displaying data stored by the processing means.

8. A secure credit card wallet according to any one of the preceding claims and further comprising a sound generation means for generating an audible alarm.

9. A secure credit card wallet according to any one of the preceding claims and further comprising a means for detecting the presence of one or more credit cards in the secure credit card wallet.

10. A secure credit card wallet according to any one of the preceding claims comprising card holding means attached to an interior side of the cover.

11. A secure credit card wallet according to any one of the preceding claims wherein the casing is substantially cuboid having one pair of faces substantially larger than the other two pairs of faces,
wherein the cover in the closed position covers the majority of one of said larger faces.

12. A secure credit card wallet according to any one of the preceding claims wherein the wallet comprises telecommunications apparatus able to function as a mobile telephone.

13. A secure credit card wallet according to any one of the preceding claims wherein the wallet comprises audio playback apparatus able to function as a music player.

## Patentansprüche

1. Sichere Kreditkarten-Brieftasche, die folgendes aufweist:
ein Gehäuse, das mindestens eine Vertiefung zur Aufnahme von Kreditkarten definiert;
einen Kartenhalter, der in der Vertiefung positioniert ist, wobei der Kartenhalter eine Vielzahl von Schlitzen aufweist, wobei jeder Schlitz für die Aufnahme einer Kreditkarte geeignet ist;
eine Abdeckung, die relativ zu dem Gehäuse zwischen einer geschlossenen Position, in welcher die Abdeckung ein Entfernen der Kreditkarten verhindert, und einer offenen Position, in welcher ein Entfernen der Kreditkarten möglich ist, beweglich ist;
ein Verriegelungselement zur lösbaren Fixierung der Abdeckung in der geschlossenen Position;
ein biometrisches Fingerabdruck-Lesegerät zum Lesen einer physischen Charakteristik eines Nutzers und Erzeugen von Daten gemäß dieser Charakteristik;
ein Verarbeitungselement zum Speichern und Verarbeiten von Daten, wobei das Verarbeitungselement mit dem biometrischen Lesegerät und dem Verriegelungselement verbunden ist; und
das Verarbeitungselement, das so angeordnet ist, dass, wenn die Charakteristik eines Nutzers ermittelt wird, den das Verarbeitungselement als ermächtigt ermittelt, die Brieftasche zu öffnen, das Verriegelungselement gelöst wird, so dass die Abdeckung in die offene Position bewegbar ist, was ein Herausnehmen der Kreditkarten aus der Vertiefung ermöglicht, **dadurch gekennzeichnet, dass** die Brieftasche des Weiteren folgendes aufweist:
ein Element zur Kommunikation mit einem von dem Nutzer getragenen mobilen Telefon.

2. Sichere Kreditkarten-Brieftasche gemäß Anspruch 1, die des Weiteren eine zweite Abdeckung, die über dem biometrischen Lesegerät beweglich ist, aufweist.

3. Sichere Kreditkarten-Brieftasche gemäß einem der vorhergehenden Ansprüche, wobei das Gehäuse ein Sicherheitselement aufweist, wobei das Sicherheitselement so operierbar ist, dass es einen Bruch im Gehäuse erkennt.

4. Sichere Kreditkarten-Brieftasche gemäß einem der vorhergehenden Ansprüche, wobei ein Eingabegerät mit der sicheren Kreditkarten-Brieftasche verbunden werden kann, wobei das Eingabegerät Eingabeelemente zur Eingabe von alphanumerischen Daten und Ausgabeelemente zur Ausgabe der alphanumerischen Daten an die sichere Kreditkarten-Brieftasche aufweist.

5. Sichere Kreditkarten-Brieftasche gemäß den Ansprüchen 1 bis 3, die des Weiteren Eingabeelemente zur Eingabe von alphanumerischen Daten und Ausgabeelemente zur Ausgabe der alphanumerischen Daten von der sicheren Kreditkarten-Brieftasche aufweist.

6. Sichere Kreditkarten-Brieftasche gemäß Anspruch 4 oder 5, wobei das Eingabegerät eine Vielzahl von Schlüsseln aufweist, wobei jeder Schlüssel einem alphanumerischen Symbol entspricht.

7. Sichere Kreditkarten-Brieftasche gemäß einem der vorhergehenden Ansprüche, die des Weiteren einen Bildschirm aufweist, der auf dem Gehäuse zum Anzeigen von Informationen positioniert ist, wobei der Bildschirm mit den Verarbeitungselementen zum Anzeigen von Daten, die von den Verarbeitungselementen gespeichert sind, verbunden ist.

8. Sichere Kreditkarten-Brieftasche gemäß einem der vorhergehenden Ansprüche, die des Weiteren ein Tonerzeugungselement zur Erzeugung eines akustischen Alarmsignals aufweist.

9. Sichere Kreditkarten-Brieftasche gemäß einem der vorhergehenden Ansprüche, die des Weiteren ein Element zur Ermittlung des Vorhandenseins von einer oder mehreren Kreditkarten in der sicheren Kreditkarten-Brieftasche aufweist.

10. Sichere Kreditkarten-Brieftasche gemäß einem der vorhergehenden Ansprüche, die Karten-Halteelemente, die an einer Innenseite des Gehäuses befestigt sind, aufweist.

11. Sichere Kreditkarten-Brieftasche gemäß einem der vorhergehenden Ansprüche, wobei das Gehäuse im Wesentlichen würfelförmig ist und ein Paar an Flächen aufweist, das im Wesentlichen größer ist als die anderen beiden Paare an Flächen,
wobei die Abdeckung in der geschlossenen Position den Großteil einer der besagten größeren Flächen abdeckt.

12. Sichere Kreditkarten-Brieftasche gemäß einem der vorhergehenden Ansprüche, wobei die Brieftasche ein Telekommunikationsgerät aufweist, das als Mobiltelefon dienen kann.

13. Sichere Kreditkarten-Brieftasche gemäß einem der vorhergehenden Ansprüche, wobei die Brieftasche ein Audio-Wiedergabegerät aufweist, das als Musik-Wiedergabegerät dienen kann.

## Revendications

1. Portefeuille sécurisé pour cartes de crédit, comprenant:
une enveloppe définissant au moins un évidement pour la réception de cartes de crédit;
un support de cartes situé dans l'évidement, où le support de cartes possède plusieurs fentes, chaque fente étant appropriée à recevoir une carte de crédit;
un couvercle déplaçable relativement au boîtier entre une position fermée dans laquelle le couvercle empêche le retrait des cartes de crédit et une position ouverte dans laquelle le retrait des cartes de crédit est possible;
un moyen de verrouillage pour immobiliser relâchablement le couvercle dans la position fermée;
un dispositif de lecture d'empreinte digitale biométrique pour lire une caractéristique physique d'un utilisateur et pour produire des données correspondant à cette caractéristique;
un moyen de traitement pour stocker et traiter les données, le moyen de traitement étant connecté au dispositif de lecture biométrique et au moyen de verrouillage; et
le moyen de traitement étant agencé de façon que lorsque la caractéristique d'un utilisateur, qui est déterminé par le moyen de traitement comme étant autorisé à ouvrir le portefeuille est détectée, le moyen de verrouillage est libéré de sorte que le couvercle est déplaçable à la position ouverte, permettant le retrait des cartes de crédit de l'évidement;
**caractérisé en ce que** le portefeuille comprend en outre des moyens pour la communication avec un téléphone mobile porté par l'utilisateur.

2. Portefeuille sécurisé pour cartes de crédit selon la revendication 1, comprenant en outre un deuxième couvercle déplaçable sur le dispositif de lecture biométrique.

3. Portefeuille sécurisé pour cartes de crédit selon l'une quelconque des revendications précédentes, où le boîtier présente un moyen de sécurité, le moyen de sécurité étant apte à détecter une rupture dans le boîtier.

4. Portefeuille sécurisé pour cartes de crédit selon l'une quelconque des revendications précédentes, où un dispositif d'entrée peut être connecté au portefeuille sécurisé pour cartes de crédit, le dispositif d'entrée ayant un moyen d'entrée pour entrer des données alphanumériques et un moyen de sortie pour émettre les données alphanumériques au portefeuille sécurisé pour cartes de crédit.

5. Portefeuille sécurisé pour cartes de crédit selon l'une quelconque des revendications 1 à 3, comprenant en outre un moyen d'entrée pour entrer des données alphanumériques et un moyen de sortie pour émettre les données alphanumériques du portefeuille sécurisé pour cartes de crédit.

6. Portefeuille sécurisé pour carte de crédit selon la revendication 4 ou 5, où le dispositif d'entrée comprend une pluralité de clés, chaque clé correspondant à un symbole alphanumérique.

7. Portefeuille sécurisé pour carte de crédit selon l'une quelconque des revendications précédentes et comprenant en outre un écran situé sur le boîtier pour afficher des informations, l'écran étant connecté au moyen de traitement pour afficher les données stockées par le moyen de traitement.

8. Portefeuille sécurisé pour carte de crédit selon l'une quelconque des revendications précédentes, et comprenant en outre un moyen de génération de sons pour produire une alarme audible.

9. Portefeuille sécurisé pour carte de crédit selon l'une quelconque des revendications précédentes, et comprenant en outre un moyen pour détecter la présence d'une ou de plusieurs cartes de crédit dans le portefeuille sécurisé pour cartes de crédit.

10. Portefeuille sécurisé pour cartes de crédit selon l'une quelconque des revendications précédentes, comprenant un moyen de retenue de carte fixé au côté intérieur du couvercle.

11. Portefeuille sécurisé pour carte de crédit selon l'une quelconque des revendications précédentes, où le boîtier est sensiblement cuboïde ayant une paire de faces sensiblement plus grandes que les deux autres paires de faces, où le couvercle dans la position fermée couvre la majorité d'une desdites faces plus grande.

12. Portefeuille sécurisé pour cartes de crédit selon l'une quelconque des revendications précédentes, où le portefeuille comprend un appareil de télécommunication apte à fonctionner comme téléphone mobile.

13. Portefeuille sécurisé pour cartes de crédit selon l'une quelconque des revendications précédentes, où le portefeuille comprend un appareil de lecture audio apte à fonctionner comme lecteur de musique.
